# EUROPEAN PATENT APPLICATION

(11) **EP 2 087 985 A2**
(43) Date of publication of application: **12.08.2009**
(21) Application number: 09152250.8
(22) Date of filing: 06.02.2009
(51) Int. Cl.: B29C 44/12

(54) **Skinned, resin-molded article**

(30) Priority: 08.02.2008 JP 2008029350
(71) Applicant: Honda Motor Co., Ltd., Minato-ku Tokyo 107-8556 (JP)
(72) Inventor: Iriyama, Satoru, Tochigi (JP); Yu, Hideaki, Tochigi (JP); Shioya, Tsunamasa, Tochigi (JP)
(74) Representative: Rupp, Christian

(57) **Abstract**

A skinned, resin-molded article includes a base material (31) having a recessed part (36), a skin material (32) having an insertion portion (42) inserted along a sidewall (35) of the base material, and a foam material (33) filled in the recessed part. The insertion portion has a planar part (43) held in contact with the sidewall, and a groove (44) disposed toward a distal end thereof. The sidewall has a projection (45) tightly engaged in the groove, thereby positioning the skin material in place.

## Description

The present invention relates to a skinned, resin-molded article having a resin-molded base material, a skin material in the form of a sheet, and a foam material filled between the base material and the skin material.

Exterior product, such as a skinned, resin-molded article having a base material, a sheet-form skin material covering the base material, and a foam material filled between the base material and the skin material, is put into practical use. Arrangements have been made to the skinned, resin-molded article put into practical use such that the foam material is prevented from leaking and such arrangements were sufficient for practical uses.

Conventionally, a skinned, resin-molded article having a skin material with a devised edge for contacting the base material is known from, for example, JP 2003-117928 A. The technique disclosed in JP 2003-117928 A will be described below with reference to FIGS. 11 and 12 hereof.

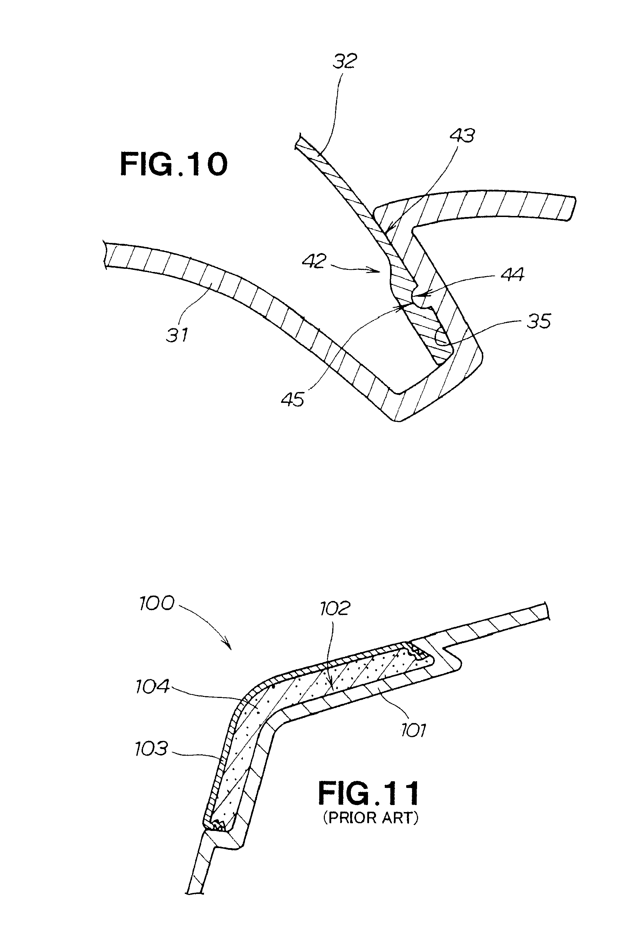

As shown in FIG. 11, a skinned, resin-molded article 100 is comprised of a resin-molded base material 101, a skin material 103 covering a recessed part 102 of the base material 101, and a foam material 104 filled in the recessed part 102 covered by the skin material 103.

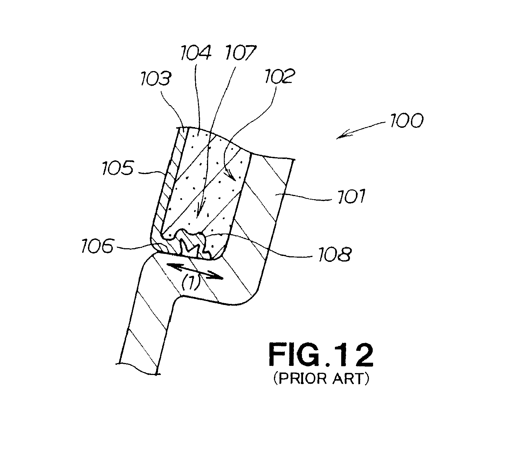

As shown in FIG. 12, the skin material 103 includes a design surface 105 covering the recessed part 102 of the base material 101, an insertion portion 107 bent and extending from the design surface 105 toward a base material sidewall 106, and a complexly-bent portion 108 formed on the insertion portion 107.

The insertion portion 107 having the complexly-bent portion 108 must be fixed against the sidewall of the base material. With such complexly-bent portion, the insertion portion 107 may not be placed in position by simply inserting it along the sidewall 107. The insertion portion 107 is likely be fixed at a position displaced in a direction of arrow (1).

Consequently, there exists a demand for a construction that enables precise positioning of the insertion portion relative to the sidewall.

According to the present invention, there is provided a skinned, resin-molded article, which comprises: a base material having a recessed part defined by sidewalls and a bottom of the base material; a skin material extending over the base material to cover the recessed part and having insertion portions provided at opposite ends of the skin material; and a foam material filled in the recessed part, wherein each of the insertion portions has a planar part held in contact with an adjacent one of the sidewalls, and a groove disposed closer to an end thereof than the planar part, and each of the sidewalls has a projection lockingly tightly engaged in the groove.

By virtue of the thus-simplified construction of the insertion portion of the skin material, it becomes possible to control the thickness of the skin material by reaction injection molding using a male/female mold. As a result, dimensional precision is provided for the skin material. In addition, because the base material is provided with the projection on the sidewall thereof and the insertion portion of the skin material is provided with the groove complementary in shape with the projection, the base material and the skin material can be positioned with increase precision, thereby providing an increased sealing effect between the two materials.

Preferably, the projection has a convex hemispherical shape, while the groove has a concave hemispherical shape complementary to the shape of the projection.

Each of the insertion portions may have a generally flat configuration.

Certain preferred embodiments of the present invention will hereinafter be described in detail, by way of example, with reference to the accompanying drawings, in which:
FIG. 1 is a schematic perspective view illustrating a passenger compartment of a vehicle employing a skinned, resin-molded article according to the present invention;
FIG. 2 is a cross-sectional view taken along line 2-2 of FIG. 1;
FIG. 3 is a view showing, on an enlarged scale, a part of the article of FIG. 2;
FIG. 4 is a schematic cross-sectional view illustrating a mode of insertion of an insertion portion on a windshield side along a sidewall of the base material;
FIG. 5 is a schematic cross-sectional view illustrating a mode of insertion of an insertion portion on a steering wheel side along an opposed sidewall of the base material;
FIG. 6A and FIG. 6B are schematic views illustrating a preparatory operation for subsequent molding of the resin-molded article;
FIG. 7A and FIG. 7B are schematic views illustrating clamping of upper and lower mold halves with the resin-molded article interposed therebetween;
FIG. 8A and FIG. 8B are schematic view illustrating filling of a foam material into the resin-molded article;
FIG. 9A and FIG. 9B are schematic views illustrating the resin-molded article in comparison with a conventional arrangement;
FIG. 10 is a schematic view illustrating, on an enlarged scale, a relevant part of an alteration of the resin-molded article;
FIG. 11 is an enlarged cross-sectional view illustrating a part of a conventional skinned, resin-molded article; and
FIG. 12 is a view showing on a further enlarged scale a part of the article part of FIG. 11.

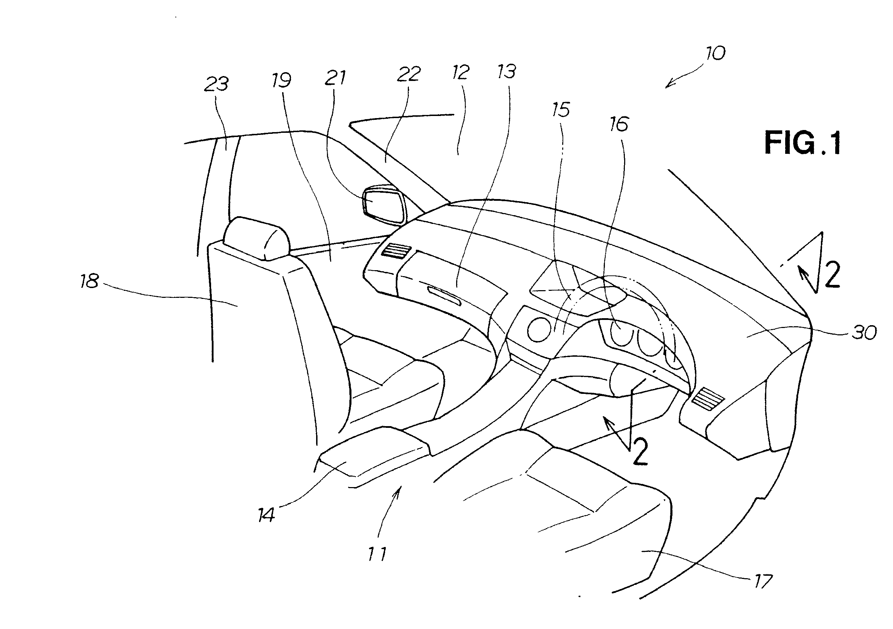

Reference is made initially to FIG. 1 showing in perspective a passenger compartment of a vehicle employing a skinned, resin-molded article according to a first embodiment of the present invention. As shown in Fig. 1, the vehicle 10 has a passenger compartment 11, a windshield 12, a glove box 13, a center console 14, a steering wheel 15 shown by a phantom line, a vehicle meter 16, a driver's seat 17, a passenger seat 18, a front left door 19, a door mirror 21, a front pillar 22, and a center pillar 23. Designated by reference numeral 30 is a skinned, resin-molded article 30 for use as an instrument panel.

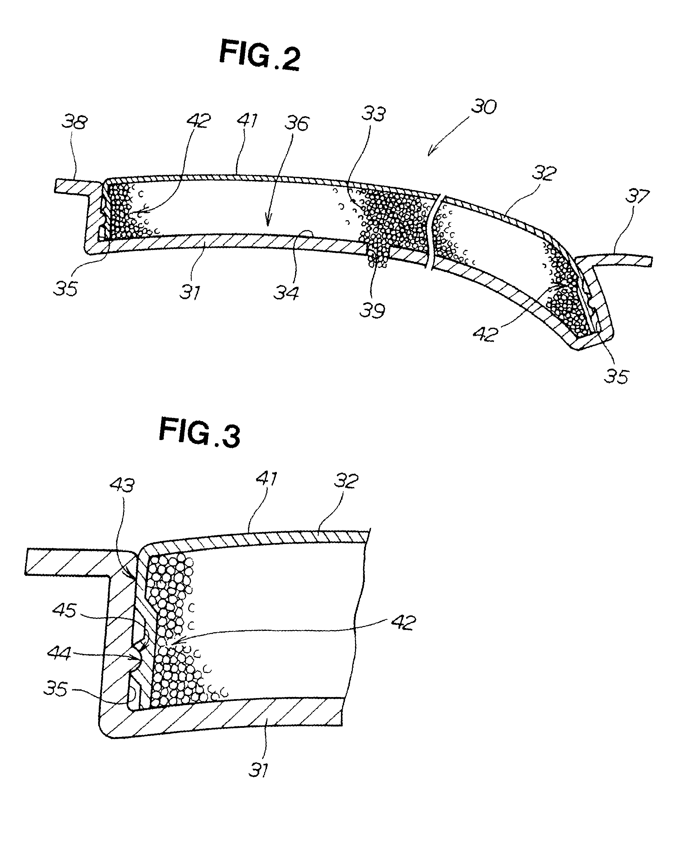

Turning now to FIG. 2, the skinned, resin-molded article 30 is comprised of a base material 31 molded from a resin material, a skin material 32 placed in fitting engagement with the base material, and a foam material 33 interposed between the base material 31 and the skin material 32.

The base material 31 includes a bottom 34, sidewalls 35, 35 rising from the bottom 34, a recessed part 36 defined by the bottom 34 and the sidewalls 35, 35, a windshield-side planar part 37 and a steering-wheel-side planar part 38 contiguous with the recessed part 36, and a filling port 39 through which the foam material 33 is filled into the recessed part 36.

The skin material 32 includes a surface part 41 for covering the recessed part 36 of the base material 31, and insertion portions 42, 42 inserted along the sidewalls 35, 35.

As shown in FIG. 3, each insertion portion 42 has a planar part 43 held in contact with the sidewall 35 and a groove 44 formed closer to a distal end than the planar part 43.

Provided on the sidewall 35 is a projection 45 designed to fit into the groove 44. By fitting the projection 45 into the groove 44, the skin material 31 is positioned in place relative to the base material 31.

The groove 44 has a center-recessed (concave) hemispherical shape. The projection 45 also has a hemispherical shape for mated engagement with the groove 44. As a result, the insertion portion 42 and the projection 45 can be surely positioned in place, thus exhibiting a desired sealing property.

It should be noted that the groove 44 may have a triangular or rectangular shape, or any other shapes, as long as it can achieve the desired mating engagement with the projection 45, though it is desirable for the groove to have a concave hemispherical configuration. Similarly, the projection 45 may have a triangular or rectangular shape, or any other shapes, which are complementary to achieve mated engagement with the groove 44.

The base material 31 may be produced by injection molding, for example. The projection 45 has a center-raised (convex) hemispherical shape which is complementary with the groove 44. In the injection molding, the convex hemispherical shape is easier to make than an edged shape because a molten resin may flow smoothly. This leads to the advantage that the base material 31 is produced with increased quality.

The skin material 32 may be produced by, for example, reaction injection molding (RIM molding) using male and female mold halves. By this method, the thickness of the skin material 32 can be controlled. With the reaction injection molding, the concave hemispherical shape is easier to make than an edged shape because a molten resin may flow smoothly. By virtue of the groove 44 having the concave hemispherical shape that is easy to make, it becomes possible to impart improved quality to the skin material 32.

The term "reaction injection molding" used herein should be construed as a method of molding wherein multiple reactive components, with or without a filling material, are mixed using a pressurized impact within a mixing chamber before the components are injected into a closed mold.

Discussion will be made next as to a method of production of the skinned, resin-molded article as arranged above.

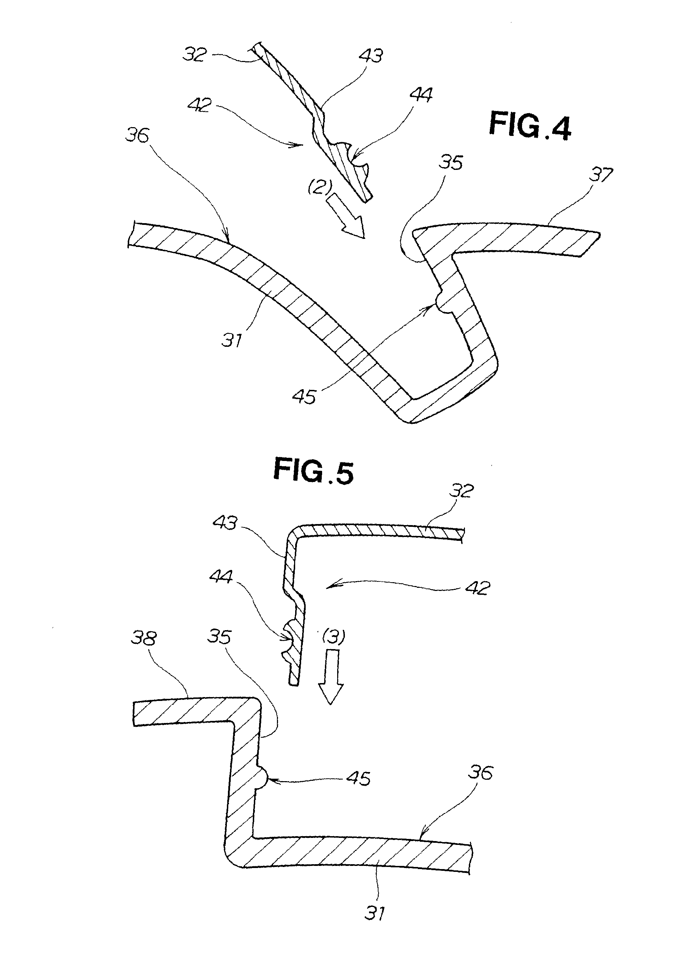

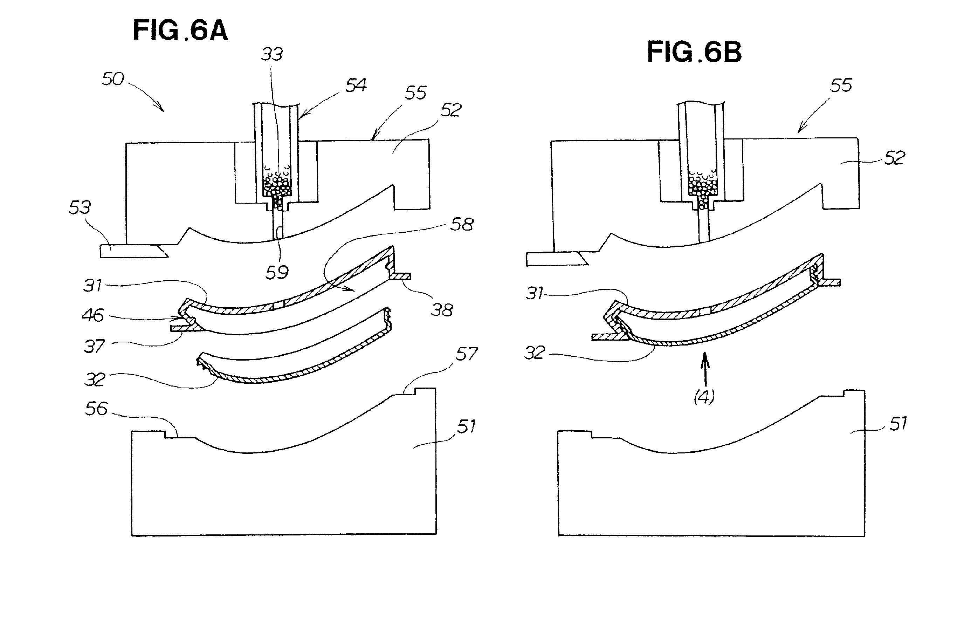

Insertion of the windshield-side insertion portion 42 along the sidewall will be described with reference to FIG. 4. The base material 31 and the skin material 32 are prepared. Then, the base material 31 is placed in one of the mold halves while the skin material 32 is placed in the other one of the mold halves, e.g., a lower mold half 51 (FIGS. 6A and 6B). By bringing an upper mold half 52 (FIGS. 6A and 6B) and the lower mold half 51 closer to each other, the insertion portion 42 of the skin material 32 moves in the direction of arrow (2) along the sidewall 35 to be fully inserted, whereupon the planar part 43 is held in contact with the sidewall 35 and the groove 44 is brought into fitting engagement with the projection 45.

By virtue of the groove 44 being of a center-recessed hemispherical (concave) shape and the projection 45 being of a center-raised hemispherical (convex) shape, the insertion portion 42 and the projection 45 can be surely placed in position. With the groove 44 and the projection 45 engaged lockingly and tightly with each other, an increased sealing effect is provided between them. In addition, by virtue of the projection 45 being of a convex hemispherical shape and the groove 44 being of a concave hemispherical shape, it becomes possible to easily place the skin material 32 in mated engagement with the base material 31.

Next, discussion will be made as to a mode of insertion of the steering-wheel-side insertion portion along the sidewall with reference to FIG. 5. Movement of the upper and lower mold halves 52, 51 closer to each other causes the insertion portion 42 to move in the direction of arrow (3) along the sidewall until the insertion portion is fully inserted, whereupon the planar part 43 is held in contact with the sidewall while the projection 45 is engaged in the groove 44.

Turning next to FIGS. 6A and 6B, discussion will be made as to preparations for molding of the skinned, resin-molded article according to the present invention. As shown in FIG. 6A, the resin-molded base material 31, the skin material 32 molded into a predetermined shape by reaction injection molding, and a molding machine 50 are provided.

The molding machine 50 is comprised of the upper mold half 52 for placing the base material 31, the lower mold half 52 for mating with the upper mold half 52, a slide 53 that is provided on the upper mold half 52 and slides fit into an undercut part 46 of the base material 31, and a foam material injector 54 disposed closely to the upper mold half 52. The upper mold half 52, the lower mold half 51 and the foam material injector 53 jointly form a molding unit 55.

The lower mold half 51 includes a stepped or shoulder part 56 for allowing the windshield-side planar part 37 to be rested thereon, and a stepped or shoulder part 57 for allowing the steering-wheel-side planar part 38 to be rested thereon.

The upper mold half 52 includes a gate 59 that guides the foam material 33 injected from the foam material injector 54 into a cavity 58.

As shown in FIG. 6B, the skin material 32 is inserted or fitted into the base material 31 as shown by arrow (4). This fitting-in operation may not necessarily be performed on the molding unit 55 but may be performed during a later step. As described above, with the base material 31 placed on the upper mold half 52 and with the skin material 32 placed on the lower mold half 51, the upper mold half 52 and the lower mold half 51 may be moved toward each other to cause the skin material 32 to be inserted into the base material 31 as shown by arrow (4). This eliminates a manual insertion operation.

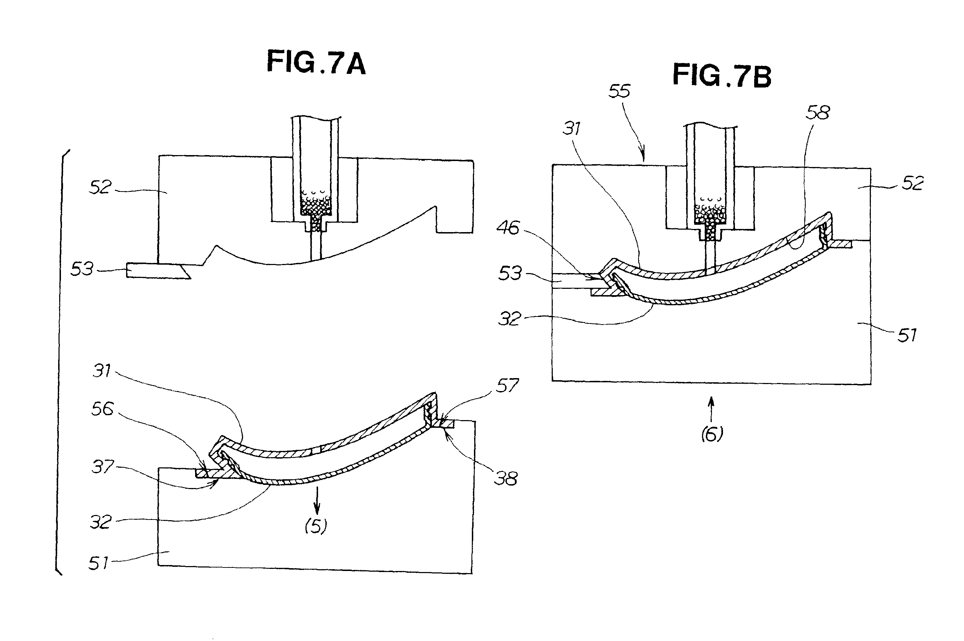

Referring next to FIGS. 7A and 7B, description will be made as to molding clamping with the skinned, resin-molded article placed therein. As shown in FIG. 7A, the base material 31 with the skin material 32 inserted is placed on the lower mold half 51 as shown by arrow (5). At this time, the windshield-side planar part 37 is placed on the windshield-side stepped part 56 while the steering-wheel-side planar part 38 is placed on the steering-wheel-side stepped part 57, so as to position the base material 31 in place.

As shown in FIG. 7B, the lower mold half 51 is elevated toward the upper mold half 52 as shown by arrow (6). The base material 31 is fitted into the cavity 58, and the slide 53 is slid into the undercut part 46. Then, the molding unit 55 is clamped.

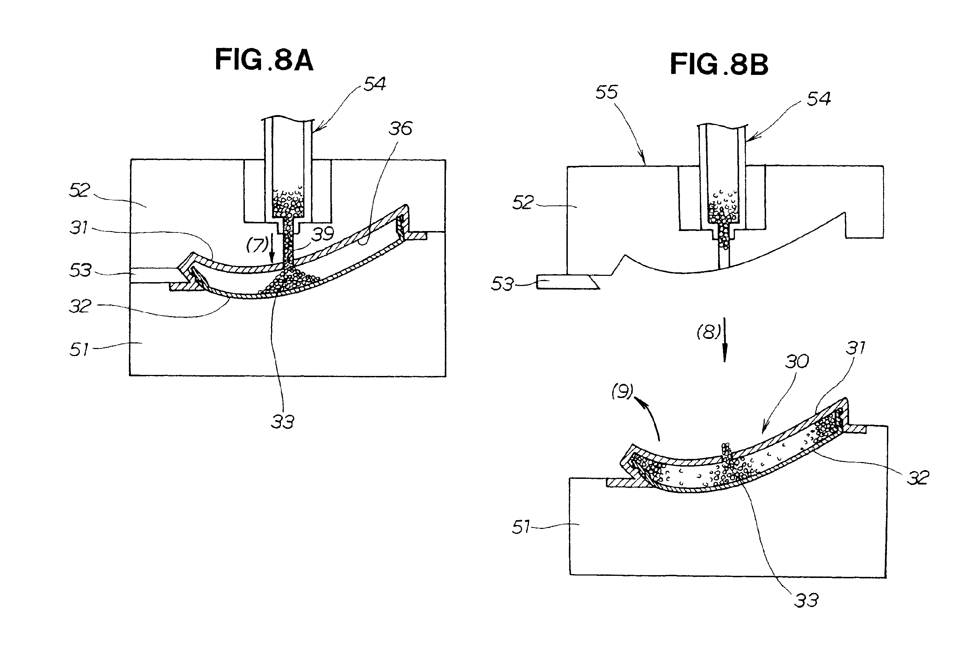

Next, referring to FIGS. 8A and 8B, description will be made as to injection of the foam material into the skinned, resin-molded article according to the present invention. As shown in FIG. 8A, the foam material injector 54 is caused to inject the foam material 33 into the base material 31 via the filling port 39 as shown by arrow (7). The foam material 33 is filled into the recessed part 36 covered and closed by the skin material 32.

As shown in FIG. 8B, the foam material 33 is hardened by appropriately heating the molding unit 55. Then, the molding unit is unclamped, as shown by arrow (8), to thereby allow the skinned, resin-molded article as a finished product to be ejected as shown by arrow (9).

The skin material 32 may be obtained by, for example, powder slush molding a sheet of soft vinyl chloride or thermoplastic elastomer olefin. The term "powder slush molding" used herein should be construed as a molding technique wherein powder-form plastics are adhered to a heated slush molding mold surface, fused and then cooled to leave a seal part profile on the surface.

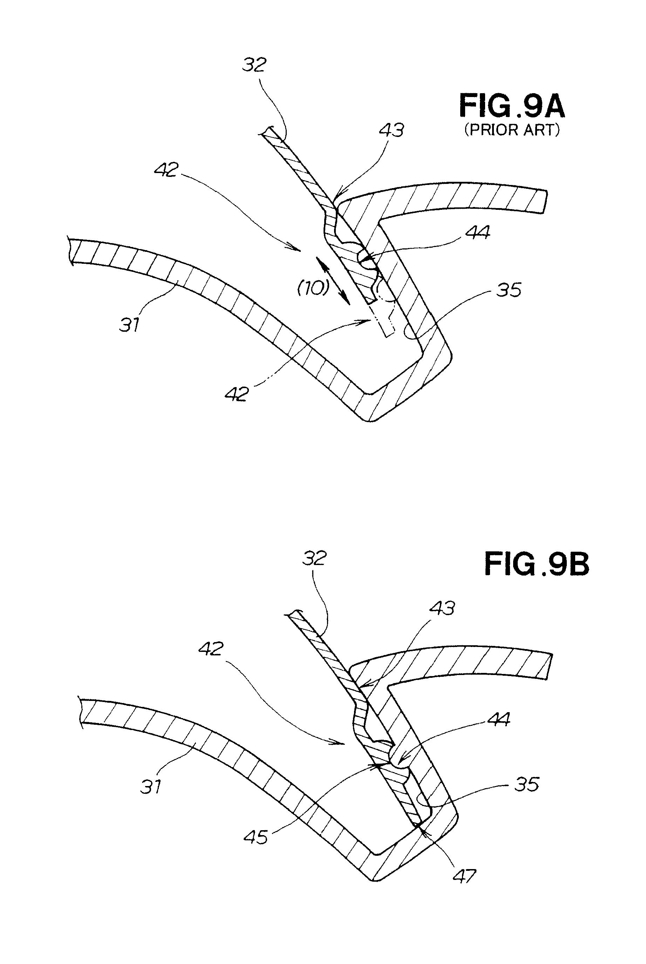

Referring next to FIGS. 9A and 9B, comparison will be made between the skinned, resin-molded article according to the present invention and a known example resin-molded article. In the known example article shown in FIG. 9A, the insertion portion 42 is simply inserted along the sidewall 35. Since the sidewall 35 is flat, the insertion portion 42 is not positioned at a desired position as shown by a phantom line, that is, displaced from a target position, as shown by arrow (10).

In the inventive article shown in FIG. 9B, while inserting the insertion portion 42 along the sidewall 35, the projection 45 is engaged in the groove 44. Because the groove 44 has a hemispherical configuration and the projection 45 has a complementary hemispherical shape, the insertion portion 42 can be easily engaged with the projection 45 and properly positioned in place. With the groove 44 engaged lockingly with the projection 45, an increased sealing effect is provided between them, thus preventing leakage of the foam material.

Because the groove 44 and the planar part 43 having a nearly same height as the groove 44 are held in contact with the sidewall 35, the insertion portion 42 lies parallel to the sidewall 35. As a result, a top end 47 of the insertion portion 42 is prevented from warping that allows leakage of the foam material.

It should additionally be note that by virtue of the projection 45 and the groove 44 both being of a hemispherical shape, the skin material 32 can be easily inserted into base material 31.

Reference is now made to FIG. 10 showing on an enlarged scale a relevant part of an altered example of the skinned, resin-molded article of the present invention. The insertion portion 42 has a planar part 43 held in contact with the sidewall 35, and a groove 44 provided closer to a top end than the planar part 43.

The insertion portion 42 has a generally flat surface with a recess of hemispherical shape formed therein. This configuration allows molten resin to flow smoothly during the reaction-injection-molding of the skin material 32, imparting improved quality to the latter.

In the embodiments discussed above, the skinned, resin-molded article has been described as being applied to an instrument panel but its usage should not be limited thereto and may be applied to other uses.

## Claims

1. A skinned, resin-molded article (30) comprising:
a base material (31) having a recessed part (36) defined by sidewalls (35, 35) and a bottom (34) of the base material (31);
a skin material (32) extending over the base material (31) to cover the recessed part (36) and having insertion portions (42) provided at opposite ends of the skin material (32); and
a foam material (33) filled in the recessed part (36),
wherein each of the insertion portions (42) has a planar part (37) held in contact with an adjacent one of the sidewalls (35, 35), and a groove (44) disposed closer to an end thereof than the planar part (37), and each of the sidewalls (35, 35) has a projection (45) lockingly engaged in the groove (44).

2. The skinned, resin-molded article of claim 1, wherein the projection (45) has a convex hemispherical shape, and the groove (44) has a concave hemispherical shape complementary to the shape of the projection (45).

3. The skinned, resin-molded article of claim 1 or 2, wherein each of the insertion portions (42) has a generally flat configuration.
